# EUROPEAN PATENT APPLICATION

(11) **EP 4 786 671 A1**
(43) Date of publication of application: **05.08.2026**
(21) Application number: 24889106.1
(22) Date of filing: 06.11.2024
(51) Int. Cl.: D06F 39/10, B01D 29/64, B01D 35/16

(54) **FILTER MODULE**

(30) Priority: 06.11.2023 KR 20230151631
(71) Applicant: LG Electronics Inc., Yeongdeungpo-gu Seoul 07336 (KR)
(72) Inventor: YOO, Younggil, Seoul 06772 (KR); SHIM, Bongchu, Seoul 06772 (KR); JUN, Jinhyung, Seoul 06772 (KR)
(74) Representative: Vossius & Partner Patentanwälte Rechtsanwälte mbB
(86) International application number: PCT/KR2024/017362
(87) International publication number: WO 2025/100919

(57) **Abstract**

The present invention relates to a filter module, and includes a housing through which wastewater passes, a filter unit disposed in the housing and configured to filter foreign matter contained in the wastewater, a turbine unit disposed in the housing and rotated according to a flow of the wastewater, and a cleaning unit in contact with an inner circumferential surface of the filter unit and rotated in conjunction with the turbine unit. Accordingly, the inner circumferential surface of the filter can be cleaned by rotating a brush using the rotational force of the turbine, so that the filter can be cleaned automatically.

## Description

### [Technical Field]

The present invention relates to a module, and more particularly, to a filter modul e capable of preventing a filter from being clogged by foreign matter such as fine dust, lint, and microplastics contained in wastewater discharged from a clothes treatment apparatus such as a w ashing machine.

### [Background Art]

Water may be used to wash textiles such as clothes. This is referred to as wet was hing. In the wet-washing process, waste fibers and particles (for example, lint) are generated. In particular, when clothes made of synthetic materials such as acrylic, nylon, and polyester are was hed, microplastics or microfibers (hereinafter, collectively referred to as "microplastics") are gen erated. The microplastics may be discharged together with the water used for washing through an outlet. The discharged microplastics may flow into rivers and seas and adversely affect the mari ne ecosystem.

Accordingly, there is a growing need to significantly reduce or eliminate the entry of microplastics into drainage and sewage systems. Recently, due to environmental regulations a nd/or heightened user awareness, demand has increased for microplastic filters that can be install ed in clothes treatment apparatuses (for example, washing machines).

Accordingly, waste fibers and particles may be filtered using a cylindrical or hollo w conical filter; however, waste fibers and particles clog the mesh of the filter, resulting in a limi tation in that the permeability of the wastewater rapidly decreases.

When the mesh of the filter is clogged, it can no longer perform a filtering functio n and the waste fibers and particles are discharged directly, thereby raising concerns about enviro nmental pollution.

In this regard, International Publication WO 2023/172344 A1 discloses a filter sys tem that increases the number of times a filter can be used by employing a vortex.

The filter system includes a spiral guide rib inside the filter to generate a vortex in wastewater flowing inside the filter, thereby reducing clogging of the filter mesh by waste fibers and particles.

However, even when the filter system described above is used, there remains a li mitation in that the mesh of the filter becomes clogged after 15 or more washing operations are p erformed.

### [Disclosure]

### [Technical Problem]

The present invention has been made in order to improve the above-described pro blems, and an object of the present invention is to provide a filter module capable of automaticall y cleaning a filter without a user having to disassemble a clothes treatment apparatus.

Another object of the present invention is to provide a filter module capable of aut omatically cleaning a filter without including a separate power source such as a motor.

Another object of the present invention is to provide a filter module capable of ph ysically sweeping away foreign matter accumulated on a filter by direct contact.

Another object of the present invention is to provide a filter module capable of co ntinuously cleaning a filter to extend the service life of the filter.

### [Technical Solution]

In order to solve the above-described problems, a filter module according to the p resent invention includes: a housing through which wastewater passes; a filter unit disposed in th e housing and configured to filter foreign matter contained in the wastewater; a turbine unit dispo sed in the housing and rotated according to a flow of the wastewater; and a cleaning unit in conta ct with an inner circumferential surface of the filter unit and rotated in conjunction with the turbi ne unit.

In this case, the filter unit may include a filter for filtering the foreign matter, and the filter may be formed in a tubular shape, with an inner diameter at an upper side greater than a n inner diameter at a lower side.

The filter unit may further include a filter rib coupled to the filter to support the fil ter, wherein the filter rib may include: a plurality of guide ribs disposed radially inward of the filt er and formed along a circumferential direction to guide the flow of the wastewater; and a conne ction rib connecting the plurality of guide ribs.

Alternatively, the filter rib may be formed in a spiral shape along an inner circumf erential surface of the filter.

Meanwhile, the turbine unit may include: a turbine shaft coupled to the cleaning u nit; and a plurality of blades formed along an outer circumferential surface of the turbine shaft an d rotated according to the flow of the wastewater.

Meanwhile, the cleaning unit may include: a cleaning shaft coupled to the turbine unit; and a brush coupled to the cleaning shaft and brought into contact with an inner side surface of the filter unit.

Meanwhile, the housing may include an inlet disposed above the filter unit and thr ough which the wastewater is introduced.

In this case, the inlet may be formed at a position eccentric with respect to the tur bine shaft.

Alternatively, the inlet may be formed radially outward of the blades.

Meanwhile, the housing may include an outlet disposed outward of the filter unit and through which the wastewater is discharged.

Meanwhile, the housing may include: an upper housing accommodating at least a part of the turbine unit therein; and a lower housing coupled to the upper housing and accommod ating the filter unit.

In this case, the inlet may be formed in the upper housing, and the outlet may be f ormed in the lower housing.

Meanwhile, the filter module according to the present invention may further inclu de a dust collection unit disposed below the filter unit and configured to collect foreign matter fil tered by the filter unit.

Meanwhile, the filter module for a clothes treatment apparatus according to the pr esent invention may further include a partition wall disposed between the dust collection unit and an inner circumferential surface of the housing.

In addition, the housing may further include a filter coupling portion coupled to a lower side of the filter unit to support the filter unit.

That is, the filter module according to the present invention includes: a filter unit disposed on a flow path through which wastewater flows and configured to filter foreign matter c ontained in the wastewater; a turbine unit disposed on an upstream side of the filter unit and rotat ed according to the flow of the wastewater; and a cleaning unit rotated in conjunction with the tu rbine unit and configured to clean foreign matter accumulated on an inner circumferential surfac e of the filter unit, such that the filter unit can be automatically cleaned when the wastewater pas ses therethrough.

### [Advantageous Effects]

As described above, according to the filter module of the present invention, the in ner circumferential surface of the filter can be cleaned by rotating the brush using the rotational f orce of the turbine, and thus the filter can be cleaned automatically.

In addition, because the turbine is rotated by the flow force of the wastewater, the filter can be automatically cleaned without including a separate power source such as a motor.

In addition, rather than cleaning the filter through a vortex of a fluid, foreign matt er accumulated on the filter can be physically swept away by direct contact through the brush.

In addition, the filter can be continuously cleaned whenever the clothes treatment apparatus is operated, thereby extending the service life of the filter.

### [Description of Drawings]

FIG. 1 is a view for describing a filter module according to one embodiment of th e present invention.
FIG. 2 is a view for describing an internal structure of FIG. 1.
FIG. 3 is an exploded perspective view for describing a filter module according to another embodiment of the present invention.
FIG. 4 is an assembled perspective view of FIG. 3.
FIG. 5 is an enlarged view for describing a direction in which wastewater is disch arged from a filter module according to another embodiment of the present invention.

### [Mode for Invention]

Hereinafter, preferred embodiments of the present invention will be described in d etail with reference to the accompanying drawings.

The present invention may be variously modified and may have various embodim ents, and specific embodiments are illustrated in the drawings and will be described in detail here in. However, this is not intended to limit the present invention to specific embodiments, and shou ld be construed as including all modifications, equivalents, and substitutes falling within the spiri t and technical scope of the present invention.

Unless defined otherwise, all terms used herein, including technical or scientific t erms, may have the same meanings as are generally understood by those of ordinary skill in the a rt to which the present invention pertains. Terms, such as those defined in commonly used dictio naries, may be construed as having meanings consistent with their meanings in the context of the related art, and unless explicitly defined in the present application, are not to be construed in an i dealized or overly formal sense.

Herein, the term "clothes treatment apparatus" means any apparatus including a f unction of washing clothes. For example, the clothes treatment apparatus may be a washing mac hine.

As used in the following description, the term "treatment of clothes" means treat ment performed on clothes, such as washing, sterilizing, bleaching, softening, and drying. Treat ment of clothes may be achieved by operations and courses performed by the clothes treatment a pparatus. One or more operations may be combined to form a course. One or more operations ma y be arranged in chronological order and combined to form a course. The operations include a w ashing operation, a rinsing operation, a dewatering operation, a drying operation, a cooling opera tion, and a refresh operation. The washing operation is an operation of separating foreign matter attached to clothes using water and detergent. The rinsing operation is an operation of separating laundry and foreign matter with water. The dewatering operation is an operation of removing wat er from the laundry. The drying operation is an operation of removing moisture from the laundry. The cooling operation is an operation of lowering the temperature of heated laundry. The refresh operation is an operation of performing at least one of deodorization, wrinkle removal, and steril ization on the laundry using at least one of air and steam.

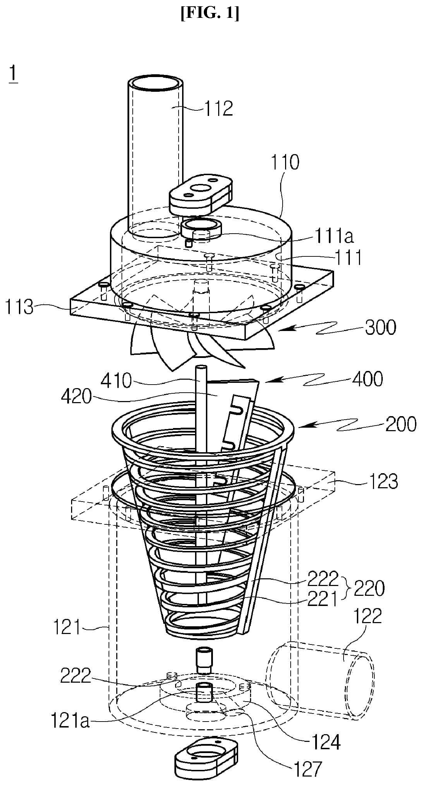

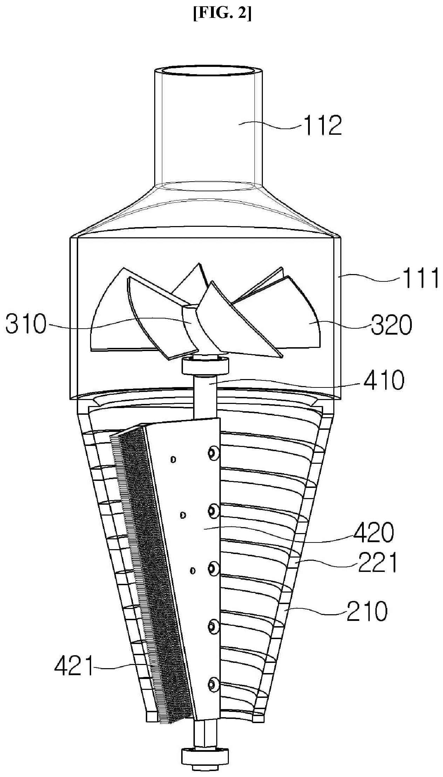

FIG. 1 illustrates a filter module according to one embodiment of the present inve ntion, and FIG. 2 illustrates an internal structure of FIG. 1.

A filter module 1 according to one embodiment of the present invention will now be described with reference to FIGS. 1 and 2.

The filter module 1 may filter foreign matter such as fine dust, lint, and microplas tics contained in wastewater discharged from a clothes treatment apparatus (not shown) such as a washing machine.

The filter module 1 may be installed in a drain flow path of the clothes treatment apparatus. Although not shown, the drain flow path refers to a path disposed below the clothes tr eatment apparatus through which wastewater discharged after treatment of clothes flows.

That is, wastewater discharged after treatment of clothes may pass through the filt er module 1 of the present invention. Specifically, wastewater discharged from the clothes treatm ent apparatus may be introduced into an inlet 112 of the filter module 1, filtered while flowing th rough a filter unit 200, and then discharged through an outlet 122.

The filter module 1 according to one embodiment of the present invention include s a housing 100, the filter unit 200, and a turbine unit 300.

In this case, the filter unit 200 and the turbine unit 300 may be accommodated in t he housing 100. In addition, the turbine unit 300 may be disposed above the filter unit 200.

For reference, as used herein, the term "upper side" may mean a direction away fr om the ground, and the term "lower side" may mean a direction toward the ground.

The housing 100 forms an exterior of the filter module 1 and accommodates the fi lter unit 200 and the turbine unit 300 therein. In addition, the housing 100 may form therein a flo w path through which wastewater can pass.

The housing 100 includes an upper housing 110 and a lower housing 120.

The upper housing 110 may accommodate at least a portion of the turbine unit 30 0 therein. That is, the upper housing 110 includes a turbine accommodating portion 111 configur ed to accommodate at least a portion of the turbine unit 300 therein. The turbine accommodating portion 111 may provide a space for accommodating the turbine unit 300 in the upper housing 11 0. For example, the turbine accommodating portion 111 may have a cylindrical shape in which at least a part of an upper end is closed. In addition, an inner circumferential diameter of the turbin e accommodating portion 111 may be greater than a diameter of the turbine unit 300.

The turbine unit 300 may be rotatably coupled inside the turbine accommodating portion 111. In this case, a shaft coupling portion 111a to which a turbine shaft 310 is rotatably c oupled may be formed at an upper end of an internal space of the turbine accommodating portion 111. For example, the shaft coupling portion 111a may be formed in the shape of a circular groo ve. Through this configuration, the turbine accommodating portion 111 can stably support the tur bine unit 300.

Meanwhile, although not shown, a bearing may be further provided in the shaft co upling portion 111a. The bearing may be arranged to surround an outer circumferential surface o f an upper end of the turbine shaft 310. Through this configuration, friction generated between th e turbine shaft 310 and the upper housing 110 can be reduced, thereby preventing damage to the turbine shaft 310 or the upper housing 110 and preventing a decrease in rotational speed of the tu rbine shaft 310 due to friction.

An inlet 112 may be formed on an upper side surface of the upper housing 110. W astewater may be introduced through the inlet 112. The inlet 112 may be disposed above the filte r unit 200. For example, the inlet 112 may be formed inside a pipe extending upward from the up per side surface of the upper housing 110. In another example, the inlet 112 may be formed on a n outer circumferential surface of the upper housing 110. That is, the inlet 112 may be formed ra dially outward of the blades 320.

In this case, the inlet 112 may be formed at a position eccentric with respect to the turbine shaft 310 coupled to the turbine accommodating portion 111. That is, the inlet 112 may be formed at a position eccentric with respect to the shaft coupling portion 111a.

Through this configuration, wastewater introduced through the inlet 112 may flow along an inner circumferential surface of the upper housing 110 while generating a vortex. The v ortex at this time may be a cyclone flow.

Furthermore, in relation to the turbine unit 300 to be described later, a plurality of blades 320 are pressed non-uniformly, and thus the turbine unit 300 can be rotated.

Meanwhile, a coupling portion 113 coupled to the lower housing 120 may be prov ided at a lower end of the upper housing 110. The coupling portion 113 of the upper housing 110 may be coupled to a coupling portion 123 of the lower housing 120. For example, the coupling p ortion 113 of the upper housing 110 may be coupled to the coupling portion 123 of the lower hou sing 120 through a coupling member such as a screw or bolt. Although not shown, a seal membe r may be provided along a circumferential direction in the coupling portion 113 so as to surround the turbine accommodating portion 111. Through this configuration, leakage of wastewater can be prevented.

The lower housing 120 may be coupled to the upper housing 110 to provide a spa ce in which the filter unit 200 and the turbine unit 300 may be accommodated therein. The lower housing 120 may be coupled below the upper housing 110.

The lower housing 120 may include a filter accommodating portion 121 in which the filter unit 200 is accommodated. For example, the filter accommodating portion 121 may be f ormed in a cylindrical shape, and the filter unit 200 may be coupled therein. In this case, at least a part of the filter unit 200 may be coupled to and supported at an upper end of the filter accomm odating portion 121.

A cleaning unit 400 may be rotatably coupled inside the filter accommodating por tion 121. In this case, a shaft coupling portion 121a to which a cleaning shaft 410 is rotatably cou pled may be formed at a lower end of an internal space of the filter accommodating portion 121. For example, the shaft coupling portion 121a may be formed in the shape of a circular groove. T hrough this configuration, the filter accommodating portion 121 can stably support the cleaning unit 400.

Meanwhile, although not shown, a bearing may be further provided in the shaft co upling portion 121a. The bearing may be arranged to surround an outer circumferential surface o f a lower end of the cleaning shaft 410. Through this configuration, friction generated between th e cleaning shaft 410 and the lower housing 120 can be reduced, thereby preventing damage to th e cleaning shaft 410 or the lower housing 120 and preventing a decrease in rotational speed of th e cleaning shaft 410 due to friction.

In addition, an outlet 122 may be formed in the lower housing 120. Wastewater m ay be discharged through the outlet 122. The outlet 122 may be disposed radially outward of the filter unit 200. For example, the outlet 122 may be formed in a pipe extending radially outward fr om an outer circumferential surface of the filter accommodating portion 121. In another example , the outlet 122 may be formed in a pipe extending downward from a lower side surface of the fil ter accommodating portion 121.

Meanwhile, a coupling portion 123 coupled to the upper housing 110 may be prov ided at an upper end of the lower housing 120. The coupling portion 123 of the lower housing 12 0 may be coupled to the coupling portion 113 of the upper housing 110. The coupling portion 12 3 of the lower housing 120 may be formed in a shape corresponding to that of the coupling porti on 113 of the upper housing 110. For example, when the coupling portion 113 of the upper housi ng 110 is in the form of a rectangular plate having a predetermined thickness, the coupling portio n 123 of the lower housing 120 may also be in the form of a rectangular plate having a predeterm ined thickness.

Meanwhile, a filter coupling portion 124 may be provided on a lower side surface of the lower housing 120. The filter coupling portion 124 may be coupled to a lower side of the f ilter unit 200 to support the filter unit 200. For example, the filter coupling portion 124 may protr ude along a circumferential direction about the shaft coupling portion 121a on the lower side surf ace of the lower housing 120 having a disk shape. In this case, a lower end of the filter unit 200 may be coupled to the filter coupling portion 124. Specifically, a lower end of the filter 210 may be coupled thereto, and among the plurality of guide ribs 221, the guide rib 221 disposed at the l owest position may be coupled thereto.

In addition, a dust collection portion 125 may be formed inside the filter coupling portion 124. The dust collection portion 125 may collect foreign matter filtered and remaining fr om the filter 210. For example, the dust collection portion 125 may be a circular space or groove centered on the shaft coupling portion 121a. The dust collection portion 125 is surrounded by the filter coupling portion 124 and the guide rib 221 so as to receive foreign matter. Therefore, forei gn matter that has not passed through the filter 210 may move downward by gravity and be colle cted in the dust collection portion 125.

Meanwhile, a dust discharge port 127 communicating with a dust collection porti on 125 to be described later may be formed in the filter coupling portion 124. The dust discharge port may be formed from the lower side surface of the lower housing 120 through the filter coup ling portion 124. Through this configuration, when foreign matter excessively accumulates in the dust collection portion 125, the foreign matter may be sucked out and discharged through the du st discharge port.

Accordingly, according to the present invention, foreign matter including micropl astics is not mixed with the wastewater, but may be collected in the dust collection portion 125 a nd discharged separately, thereby preventing water pollution.

The filter unit 200 is disposed in the housing 100 and may filter foreign matter co ntained in the wastewater. Specifically, the filter unit 200 is disposed on a flow path through whi ch the wastewater flows so that the wastewater may pass therethrough, and the filter unit 200 ma y filter foreign matter from the passing wastewater.

Specifically, the filter unit 200 includes the filter 210 and a filter rib 220. The filte r 210 may filter foreign matter contained in the wastewater. The filter 210 may be formed in a m esh shape and may filter foreign matter from a fluid passing therethrough.

The filter 210 may be in the form of a hollow tube. In this case, the filter 210 may have an inner diameter at an upper side greater than an inner diameter at a lower side. For exam ple, the filter 210 may have a hollow conical or truncated conical shape. Accordingly, wastewate r introduced through the inlet 112 may flow along an inner circumferential surface of the filter 2 10 while foreign matter is filtered.

Meanwhile, a mesh interval of the filter 210 of the present invention may be sized to filter waste fibers and particles. For example, the mesh interval of the filter 210 may be 5 mm or less. Through this configuration, the filter 210 can reduce environmental pollution by filtering microplastics and the like contained in the wastewater.

Meanwhile, as described above, when the mesh interval of the filter 210 is small, waste fibers and particles may clog the mesh of the filter, causing the permeability of the wastew ater to rapidly decrease. When the mesh of the filter 210 is clogged, it can no longer perform a fil tering function, and waste fibers and particles are discharged directly into a sewer, thereby raisin g concerns about environmental pollution.

In particular, a filter 210 clogged with microplastics cannot be washed away with water, because doing so would discharge the microplastics back into the sewer. Therefore, in ord er to increase the number of times the filter 210 can be used without discharging microplastics, it is necessary to reduce clogging of the filter 210 by foreign matter.

To solve this problem, in the filter module 1 according to the present invention, th e filter unit 200 may further include the filter rib 220 coupled to the filter 210 to support the filter 210.

The filter rib 220 may induce a vortex in wastewater flowing along an inner circu mferential surface of the filter 210. For example, the filter rib 220 may include: a plurality of gui de ribs 221 disposed radially inward of the filter 210 and formed along a circumferential directio n to guide the flow of the wastewater; and connection ribs 222 connecting the plurality of guide r ibs 221. That is, the filter rib 220 may include a plurality of annular guide ribs 221 arranged at pr edetermined intervals in an upper-lower direction. In another example, the filter rib 220 may be d isposed radially inward of the filter 210 and may be formed in a spiral shape along the inner circ umferential surface of the filter 210.

Through this configuration, a vortex may be generated in wastewater flowing alon g the inner circumferential surface of the filter 210. Accordingly, a flow force of the wastewater i ntended to pass outward through the filter 210 may be reduced. As a result, foreign matter contai ned in the wastewater may gather toward a lower side of the filter 210 without being caught in th e mesh.

Meanwhile, the filter module 1 according to the present invention may further incl ude the turbine unit 300.

The turbine unit 300 is disposed in the housing 100 and may be rotated according to the flow of the wastewater. Specifically, the turbine unit 300 is disposed in the housing 100 an d may be disposed on an upstream side of the filter unit 200.

The turbine unit 300 includes the turbine shaft 310 and the blades 320.

The turbine shaft 310 may be disposed in the upper housing 110. For example, the turbine shaft 310 may be formed in a bar shape or a cylindrical shape. An upper end of the turbi ne shaft 310 may be coupled to the shaft coupling portion 111a. In addition, a lower end of the tu rbine shaft 310 may be coupled to the cleaning unit 400.

The blades 320 may be disposed on an outer circumferential surface of the turbine shaft 310. The blades 320 may extend radially outward from the outer circumferential surface of the turbine shaft 310. A plurality of the blades 320 may be formed along the outer circumferenti al surface of the turbine shaft 310. Each blade 320 may be formed to have a predetermined curva ture or as a surface inclined at a predetermined angle with respect to a horizontal plane.

A flow force of the wastewater may be applied to the blades 320. The blades 320 may receive the flow force of the wastewater and rotate about the turbine shaft 310 as a rotationa l axis.

Accordingly, when wastewater is introduced through the inlet 112, the blades 320 may rotate about the turbine shaft 310 as the rotational axis. In this case, the turbine shaft 310 m ay rotate together with the cleaning unit 400.

The filter module 1 according to the present invention may further include the cle aning unit 400. The cleaning unit 400 may rotate in conjunction with the turbine unit 300 and ma y come into contact with the inner circumferential surface of the filter unit 200. Specifically, the cleaning unit 400 may include the cleaning shaft 410 and a brush 420.

The cleaning shaft 410 may be disposed in the lower housing 120. For example, t he cleaning shaft 410 may be formed in a bar shape. An upper end of the cleaning shaft 410 may be coupled to the turbine unit 300. Specifically, the upper end of the cleaning shaft 410 may be c oupled to the turbine shaft 310. In addition, a lower end of the cleaning shaft 410 may be rotatabl y coupled to the lower housing 120.

With this configuration, when the turbine shaft 310 rotates, the cleaning shaft 410 may also rotate together therewith.

The brush 420 is coupled to the cleaning shaft 410 and may contact an inner side surface of the filter unit 200.

The brush 420 may extend from the cleaning shaft 410 so as to contact the inner c ircumferential surface of the filter unit 200. For example, the brush 420 may be formed generally in the shape of an inverted triangle or a right trapezoid, and at least a radially outer end portion t hereof may be provided with a plurality of bristles 421. The brush 420 may sweep away foreign matter including microplastics.

Accordingly, when the turbine unit 300 rotates, the brush 420 may rotate while be ing in contact with the inner circumferential surface of the filter unit 200 so as to clean the inner circumferential surface of the filter unit 200. In this case, foreign matter accumulated on the inne r circumferential surface of the filter 210 may be swept away while rubbing against the brush 42 0, the foreign matter may agglomerate with one another, and the foreign matter may gather towar d a lower side of the filter 210 due to gravity.

Accordingly, according to the present invention, the filter rib 220 induces a vortex so as to prevent foreign matter from accumulating on the inner circumferential surface of the filt er 210, and at the same time the brush 420 rotates to clean the accumulated foreign matter, thereb y preventing the filter 210 from being clogged by foreign matter including microplastics and exte nding the service life of the filter 210.

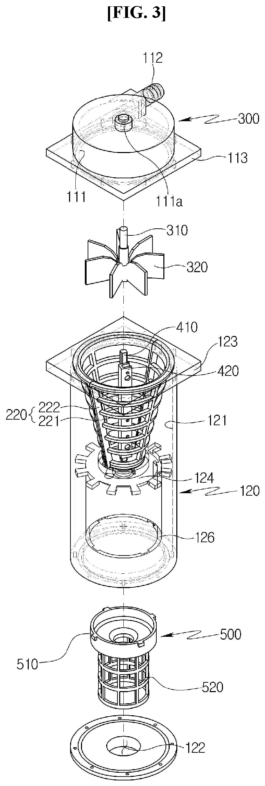

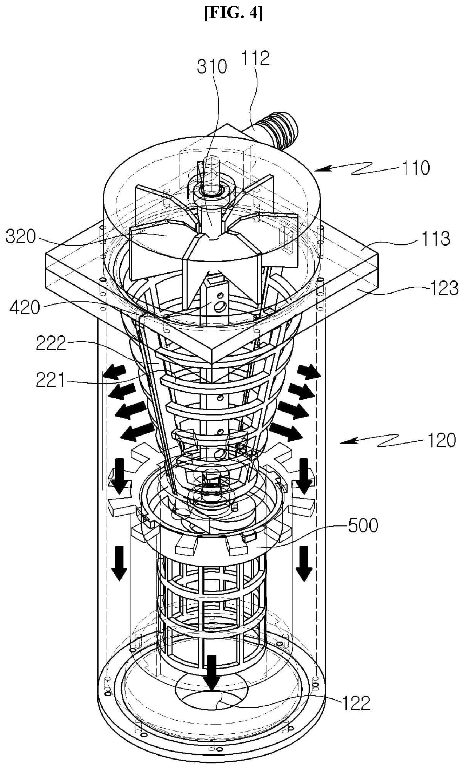

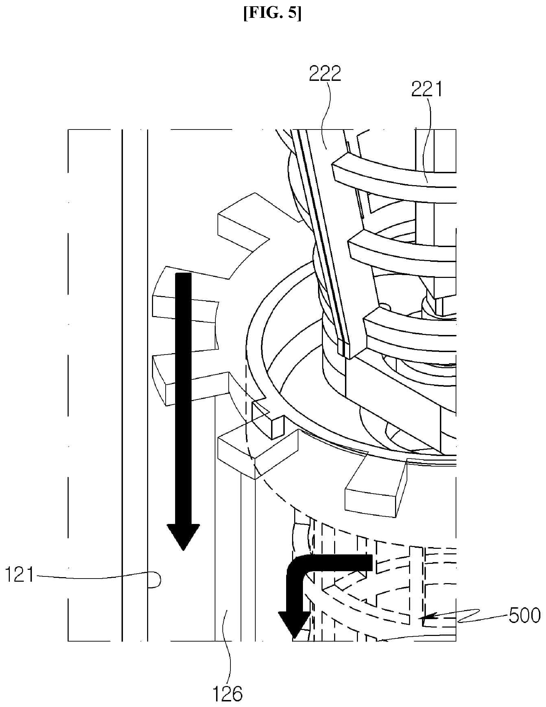

Meanwhile, FIG. 3 is an exploded perspective view for describing a filter module for a clothes treatment apparatus according to another embodiment of the present invention, FIG. 4 is an assembled perspective view of FIG. 3, and FIG. 5 is an enlarged view for describing a dir ection in which wastewater is discharged from the filter module for a clothes treatment apparatus according to another embodiment of the present invention.

A filter module for a clothes treatment apparatus according to another embodimen t of the present invention will now be described with reference to FIGS. 3 to 5.

A filter module 1 according to another embodiment of the present invention inclu des a housing 100, a filter unit 200, and a turbine unit 300.

In this case, the filter unit 200 and the turbine unit 300 may be accommodated in t he housing 100. In addition, the turbine unit 300 may be disposed above the filter unit 200.

The housing 100 forms an exterior of the filter module 1 and accommodates the fi lter unit 200 and the turbine unit 300 therein. In addition, the housing 100 may form therein a flo w path through which wastewater can pass.

The housing 100 includes an upper housing 110 and a lower housing 120.

The upper housing 110 may accommodate at least a portion of the turbine unit 30 0 therein. That is, the upper housing 110 includes a turbine accommodating portion 111 configur ed to accommodate at least a portion of the turbine unit 300 therein. The turbine accommodating portion 111 may provide a space for accommodating the turbine unit 300 in the upper housing 11 0. For example, the turbine accommodating portion 111 may have a cylindrical shape in which at least a part of an upper end is closed. In addition, an inner circumferential diameter of the turbin e accommodating portion 111 may be greater than a diameter of the turbine unit 300.

The turbine unit 300 may be rotatably coupled inside the turbine accommodating portion 111. In this case, a shaft coupling portion 111a to which the turbine shaft 310 is rotatably coupled may be formed at an upper end of an internal space of the turbine accommodating porti on 111. For example, the shaft coupling portion 111a may be formed in the shape of a circular gr oove. Through this configuration, the turbine accommodating portion 111 can stably support the turbine unit 300.

Meanwhile, although not shown, a bearing may be further provided in the shaft co upling portion 111a. The bearing may be arranged to surround an outer circumferential surface o f an upper end of the turbine shaft 310. Through this configuration, friction generated between th e turbine shaft 310 and the upper housing 110 can be reduced, thereby preventing damage to the turbine shaft 310 or the upper housing 110 and preventing a decrease in rotational speed of the tu rbine shaft 310 due to friction.

An inlet 112 may be formed on an upper side surface of the upper housing 110. W astewater may be introduced through the inlet 112. The inlet 112 may be disposed above the filte r unit 200. For example, the inlet 112 may be formed on an outer circumferential surface of the u pper housing 110. That is, the inlet 112 may be formed radially outward of the blades 320.

In this case, the inlet 112 may be formed so as to communicate with an internal sp ace of the upper housing 110, and a direction in which the inlet 112 is formed may be a tangentia l direction with respect to the internal space of the upper housing 110. Through this configuratio n, wastewater introduced through the inlet 112 may flow along an inner circumferential surface o f the upper housing 110 and generate a cyclone flow rotating along a circumferential direction in side the upper housing 110 and the lower housing 120.

Meanwhile, a coupling portion coupled to the lower housing 120 may be provided at a lower end of the upper housing 110. The coupling portion 113 of the upper housing 110 ma y be coupled to the coupling portion 123 of the lower housing 120. For example, the coupling po rtion 113 of the upper housing 110 may be coupled to the coupling portion 123 of the lower hous ing 120 through a coupling member such as a screw or bolt. Although not shown, a seal member may be provided in the coupling portion 113 along a circumferential direction so as to surround t he turbine accommodating portion 111. Through this configuration, leakage of wastewater can b e prevented.

The lower housing 120 may be coupled to the upper housing 110 to provide a spa ce in which the filter unit 200 and the turbine unit 300 may be accommodated therein. The lower housing 120 may be coupled below the upper housing 110.

The lower housing 120 may include a filter accommodating portion 121 in which the filter unit 200 is accommodated. For example, the filter accommodating portion 121 may be f ormed in a cylindrical shape, and the filter unit 200 may be coupled therein. In this case, at least a part of the filter unit 200 may be coupled to and supported at an upper end of the filter accomm odating portion 121.

A cleaning unit 400 may be rotatably coupled inside the filter accommodating por tion 121. In this case, a shaft coupling portion 121a to which the cleaning shaft 410 is rotatably c oupled may be formed at a lower end of an internal space of the filter accommodating portion 12 1. For example, the shaft coupling portion 121a may be formed in the shape of a circular groove. Through this configuration, the filter accommodating portion 121 can stably support the cleaning unit 400.

Meanwhile, although not shown, a bearing may be further provided in the shaft co upling portion 121a. The bearing may be arranged to surround an outer circumferential surface o f a lower end of the cleaning shaft 410. Through this configuration, friction generated between th e cleaning shaft 410 and the lower housing 120 can be reduced, thereby preventing damage to th e cleaning shaft 410 or the lower housing 120 and preventing a decrease in rotational speed of th e cleaning shaft 410 due to friction.

In addition, an outlet 122 may be formed in the lower housing 120. Wastewater m ay be discharged through the outlet 122. For example, the outlet 122 may be formed on a lower s ide surface of the lower housing 120.

Meanwhile, a coupling portion 123 coupled to the upper housing 110 may be prov ided at an upper end of the lower housing 120. The coupling portion 123 of the lower housing 12 0 may be coupled to the coupling portion 113 of the upper housing 110. The coupling portion 12 3 of the lower housing 120 may be formed in a shape corresponding to that of the coupling porti on 113 of the upper housing 110. For example, when the coupling portion 113 of the upper housi ng 110 is in the form of a rectangular plate having a predetermined thickness, the coupling portio n 123 of the lower housing 120 may also be in the form of a rectangular plate having a predeterm ined thickness.

Meanwhile, a filter coupling portion 124 may be provided inside the lower housin g 120. For example, the filter coupling portion 124 may be formed in a disk shape, and protrusio ns may protrude from a radially outer end thereof at predetermined angular intervals along a circ umferential direction. Through this configuration, liquid filtered by the filter unit 200 may pass t herethrough.

Meanwhile, a lower end of the filter unit 200 may be coupled to an upper side of t he filter coupling portion 124. Specifically, a lower end of the filter 210 may be coupled thereto, and among the plurality of guide ribs 221, the guide rib 221 disposed at the lowest position may be coupled thereto.

In addition, a circular hole may be formed at a radial center of the filter coupling portion 124 so that foreign matter filtered and remaining from the filter unit 200 may pass theret hrough. Foreign matter that has passed through the hole as described above may be collected in a dust collection unit 500 due to gravity.

Meanwhile, a partition wall 126 may be disposed below the filter coupling portion 124. The partition wall 126 may be disposed between an inner circumferential surface of the low er housing 120 and the dust collection unit 500. The partition wall 126 may block the flow of liq uid between the inner circumferential surface of the lower housing 120 and the dust collection un it 500. Through this configuration, filtered liquid from the filter unit 200 may be prevented from flowing backward into the dust collection unit 500. In contrast, liquid passing through the dust co llection unit 500 may be guided to flow downward by gravity.

Meanwhile, a lower end of the partition wall 126 may be bent radially inward. Ac cordingly, the lower end of the partition wall 126 may form an annular bent surface. In this case, open spaces may be formed in the bent surface at predetermined intervals along a circumferential direction.

The filter unit 200 is disposed in the housing and may filter foreign matter contain ed in the wastewater.

Specifically, the filter unit 200 includes the filter 210 and the filter rib 220. The fil ter 210 may filter foreign matter contained in the wastewater. The filter 210 may be formed in a mesh shape and may filter foreign matter from a fluid passing therethrough.

The filter 210 may be in the form of a hollow tube. In this case, the filter 210 may have an inner diameter at an upper side greater than an inner diameter at a lower side. For exam ple, the filter 210 may have a hollow conical or truncated conical shape. Accordingly, wastewate r introduced through the inlet 112 may flow along the inner circumferential surface of the filter 2 10 while foreign matter is filtered.

The filter rib 220 may induce a vortex in wastewater flowing along the inner circu mferential surface of the filter 210. For example, the filter rib 220 may include: a plurality of gui de ribs 221 disposed radially inward of the filter 210 and formed along a circumferential directio n to guide the flow of the wastewater; and connection ribs 222 connecting the plurality of guide r ibs 221. That is, the filter rib 220 may include a plurality of annular guide ribs 221 arranged at pr edetermined intervals in an upper-lower direction.

Meanwhile, the filter module 1 according to the present invention may further incl ude the turbine unit 300.

The turbine unit 300 is disposed in the housing 100 and may rotate according to th e flow of the wastewater. Specifically, the turbine unit 300 may include the turbine shaft 310 and the blades 320.

The turbine shaft 310 may be disposed in the upper housing 110. For example, the turbine shaft 310 may be formed in a bar shape or a cylindrical shape. An upper end of the turbi ne shaft 310 may be coupled to the shaft coupling portion 111a. In addition, a lower end of the tu rbine shaft 310 may be coupled to the cleaning unit 400.

The blades 320 may be disposed on an outer circumferential surface of the turbine shaft 310. The blades 320 may extend radially outward from the outer circumferential surface of the turbine shaft 310. A plurality of the blades 320 may be formed along the outer circumferenti al surface of the turbine shaft 310. For example, when the inlet 112 is formed on the outer circu mferential surface of the upper housing 110, each blade 320 may be formed in a vertical directio n.

Accordingly, a flow force of the wastewater may be applied to the blades 320. Th e blades 320 may receive the flow force of the wastewater and rotate about the turbine shaft 310 as a rotational axis.

Accordingly, when wastewater is introduced through the inlet 112, the blades 320 may rotate about the turbine shaft 310 as the rotational axis. In this case, the turbine shaft 310 m ay rotate together with the cleaning unit 400.

The filter module 1 according to this embodiment may further include the cleanin g unit 400. The cleaning unit 400 may rotate in conjunction with the turbine unit 300 and may co me into contact with the inner circumferential surface of the filter unit 200. Specifically, the clea ning unit 400 may include the cleaning shaft 410 and the brush 420.

The cleaning shaft 410 may be disposed in the lower housing 120. For example, t he cleaning shaft 410 may be formed in a bar shape. An upper end of the cleaning shaft 410 may be coupled to the turbine unit 300. Specifically, the upper end of the cleaning shaft 410 may be c oupled to the turbine shaft 310. In addition, a lower end of the cleaning shaft 410 may be rotatabl y coupled to the lower housing 120.

With this configuration, when the turbine shaft 310 rotates, the cleaning shaft 410 may also rotate together therewith.

The brush 420 is coupled to the cleaning shaft 410 and may contact an inner side surface of the filter unit 200.

The brush 420 may extend from the cleaning shaft 410 so as to contact the inner c ircumferential surface of the filter unit 200.

Accordingly, when the turbine unit 300 rotates, the brush 420 may rotate while be ing in contact with the inner circumferential surface of the filter unit 200 so as to clean the inner circumferential surface of the filter unit 200. In this case, foreign matter accumulated on the inne r circumferential surface of the filter 210 may be swept away while rubbing against the brush 42 0, the foreign matter may agglomerate with one another, and the foreign matter may move towar d a lower side of the filter 210 due to gravity and be collected in the dust collection unit 500.

A dust collection unit 500 may be coupled to a lower portion of the filter coupling portion 124. Specifically, the dust collection unit 500 may include a mounting portion 510. The mounting portion may be formed in a cylindrical shape with an open upper side and a closed low er side surface, and a circular hole may be formed at a radial center of the lower side surface. Ac cordingly, foreign matter moved downward along the filter unit 200 may be introduced into an u pper portion of the mounting portion 510 and gather toward a center of the lower side surface of the mounting portion 510, and then may pass through the hole.

Meanwhile, protrusions may be formed on an outer circumferential surface of the mounting portion 510 at predetermined intervals along a circumferential direction. When the mo unting portion 510 is coupled into the partition wall 126, the protrusions may guide the mounting portion 510 to pass through spaces formed at the lower end of the partition wall 126. With this c onfiguration, the mounting portion 510 may be guided to be coupled at a correct position.

The dust collection unit 500 may collect foreign matter filtered and remaining fro m the filter 210. For example, the dust collection unit 500 may include a collection body 520 for med generally in a cylindrical shape and in a lattice form, and a filter (not shown) surrounding th e collection body. Through this configuration, foreign matter introduced into the dust collection unit 500 may be filtered and collected once more.

Accordingly, wastewater filtered in the dust collection unit 500 may flow downw ard along the partition wall 126 and then be discharged through the outlet 122.

Although the present invention has been described in detail through specific embo diments above, this is for specifically describing the present invention, and the present invention is not limited thereto. It will be apparent that modifications or improvements may be made by th ose skilled in the art within the technical spirit of the present invention.

All simple modifications and alterations of the present invention are deemed to be long to the scope of the present invention, and the specific scope of protection of the present inve ntion will be made clear by the appended claims.

## Claims

1. A filter module comprising:
a housing through which wastewater passes;
a filter unit disposed in the housing and configured to filter foreign matter contained in the wastewater;
a turbine unit disposed in the housing and rotated according to a flow of the wastewater;
and a cleaning unit in contact with an inner circumferential surface of the filter unit and rotated in conjunction with the turbine unit.

2. The filter module of claim 1, wherein the filter unit includes
a filter configured to filter the foreign matter, and
wherein the filter is formed in a tubular shape, with an inner diameter at an upper side greater than an inner diameter at a lower side.

3. The filter module of claim 2, wherein the filter unit further includes
a filter rib coupled to the filter to support the filter, and
wherein the filter rib includes:
a plurality of guide ribs disposed radially inward of the filter and formed along a circumferential direction to guide the flow of the wastewater;
and a connection rib connecting the plurality of guide ribs.

4. The filter module of claim 2, wherein the filter unit further includes
a filter rib coupled to the filter to support the filter, and
wherein the filter rib is formed in a spiral shape along an inner circumferential surface of the filter.

5. The filter module of claim 1, wherein the turbine unit includes:
a turbine shaft coupled to the cleaning unit;
and a plurality of blades formed along an outer circumferential surface of the turbine shaft and rotated according to the flow of the wastewater.

6. The filter module of claim 1, wherein the cleaning unit includes:
a cleaning shaft coupled to the turbine unit;
and a brush coupled to the cleaning shaft and brought into contact with an inner side surface of the filter unit.

7. The filter module of claim 1, wherein the housing includes
an inlet disposed above the filter unit and through which the wastewater is introduced.

8. The filter module of claim 7, wherein the turbine unit includes:
a turbine shaft coupled to the cleaning unit; and
a plurality of blades formed along an outer circumferential surface of the turbine shaft and rotated according to the flow of the wastewater, and
wherein the inlet is formed at a position eccentric with respect to the turbine shaft.

9. The filter module of claim 7, wherein the turbine unit includes:
a turbine shaft coupled to the cleaning unit;
and a plurality of blades formed along an outer circumferential surface of the turbine shaft and rotated according to the flow of the wastewater, and
wherein the inlet is formed radially outward of the blades.

10. The filter module of claim 1, wherein the housing includes
an outlet disposed outward of the filter unit and through which the wastewater is discharged.

11. The filter module of claim 1, wherein the housing includes:
an upper housing accommodating at least a part of the turbine unit therein;
and a lower housing coupled to the upper housing and accommodating the filter unit.

12. The filter module of claim 1, further comprising
a dust collection unit disposed below the filter unit and configured to collect foreign matter filtered by the filter unit.

13. The filter module of claim 12, further comprising
a partition wall disposed between the dust collection unit and an inner circumferential surface of the housing.

14. The filter module of claim 1, wherein the housing further includes
a filter coupling portion coupled to a lower side of the filter unit to support the filter unit.

15. A filter module comprising:
a filter unit disposed on a flow path through which wastewater flows and configured to filter foreign matter contained in the wastewater;
a turbine unit disposed on an upstream side of the filter unit and rotated according to the flow of the wastewater;
and a cleaning unit rotated in conjunction with the turbine unit and configured to clean foreign matter accumulated on an inner circumferential surface of the filter unit.
